# EUROPEAN PATENT SPECIFICATION

(11) **EP 4 286 921 B1**
(45) Date of publication and mention of the grant of the patent: **07.10.2026**
(21) Application number: 21923156.0
(22) Date of filing: 08.12.2021
(51) Int. Cl.: G02C 7/02, G02C 7/06, G06F 30/10

(54) **EYEGLASS LENS DESIGN DEVICE, EYEGLASS LENS DESIGN METHOD, AND PROGRAM**
BRILLENGLASENTWURFSVORRICHTUNG, BRILLENGLASENTWURFSVERFAHREN UND PROGRAMM
DISPOSITIF DE CONCEPTION DE LENTILLE DE LUNETTES, PROCÉDÉ DE CONCEPTION DE LENTILLE DE LUNETTES ET PROGRAMME

(30) Priority: 28.01.2021 JP 2021012194
(43) Date of publication of application: 06.12.2023
(73) Proprietor: Nikon-Essilor Co., Ltd., Tokyo 130-0026 (JP)
(72) Inventor: CHO, Sungjin, Tokyo 130-0026 (JP)
(74) Representative: Viering, Jentschura & Partner mbB Patent- und Rechtsanwälte
(86) International application number: PCT/JP2021/045150
(87) International publication number: WO 2022/163151

(56) References cited:
- EP-A1- 2 975 450
- WO-A1-2017/213135
- WO-A1-2018/079836
- WO-A1-2020/004620
- JP-A- 2007 327 984
- JP-A- 2013 033 298
- JP-A- 2013 171 134
- JP-A- 2017 122 941
- JP-A- 2019 045 545
- JP-A- H05 341 238
- US-A1- 2010 296 052
- US-A1- 2013 265 540
- US-B2- 8 162 478

## Description

### [Technical Field]

The present invention relates to an eyeglass lens processing plant, an eyeglass lens design method, and a program.

Priority is claimed on Japanese Patent Application No. 2021-012194, filed January 28, 2021.

### [Background Art]

When an eyeglass lens is used to correct the refraction of an eye, distortion occurs in the field of view due to the prism effect of the lens. Current eyeglass lenses reduce distortion by making a front or rear surface of the lens aspherical. In the case of binocular vision, it is generally known that a spatial depth is recognized based on retinal disparity and convergence of both eyes.

If a prescription required for refractive correction is different for both eyes, the prism effect generated by the lens will have different values for both eyes if the refractive correction is performed with an eyeglass lens, and the retinal disparity and convergence of both eyes will change greatly depending on the position of an object. As a result, space is more likely to be recognized as distorted in binocular vision.

However, a current eyeglass lens design does not consider such a distortion of spatial recognition due to binocular vision.

A method of designing a pair of lenses for eyeglasses consisting of a left-eye lens and a right-eye lens corresponding to each of left and right eyes is known (refer to Patent Document 1, for example).

### [Citation List]

### [Patent Literature]

[Patent Literature 1] Japanese Patent No. 5140768

A further method of the prior art is disclosed in US 2010/296052 A1.

### [Summary of Invention]

### [Technical Problem]

An object of the present invention is to provide an eyeglass lens processing plant, an eyeglass lens design method, and a program capable of reducing distortion when the surroundings are viewed with binocular vision.

### [Solution to Problem]

In order to solve the problems described above, an eyeglass lens processing plant is defined in claim 1.

An eyeglass lens design method is defined in claim 6.

A program is defined in claim 7.

### [Advantageous Effects of Invention]

According to embodiments of the present invention, it is possible to provide an eyeglass lens processing plant, an eyeglass lens design method, and a program capable of reducing distortion when the surroundings are viewed with binocular vision.

### [Brief Description of Drawings]

FIG. 1 is a diagram which shows an eyeglass lens processing system according to the present embodiment.
FIG. 2A is a diagram which shows an example of a relationship between an optimization parameter and a spherical strength error and astigmatism.
FIG. 2B is a diagram which shows an example of the relationship between the optimization parameter and the spherical strength error and astigmatism.
FIG. 3 is a diagram which shows an example of a relationship between the optimization parameter and a prism in a periphery of the lens.
FIG. 4 is a diagram which shows an example of a relationship between a spherical strength and the prism in the periphery of the lens.
FIG. 5 is a diagram which shows an example of information indicating a relationship between a spherical strength (D) and the prism in the periphery of the lens stored by a design device according to the present embodiment.
FIG. 6 is a diagram which shows an example of processing of the design device according to the present embodiment.
FIG. 7 is a diagram which shows an example of a lens design by the design device according to the present embodiment.
FIG. 8 is a diagram which shows an example of the lens design by the design device according to the present embodiment.
FIG. 9 is a diagram which shows an example of the lens design by the design device according to the present embodiment.
FIG. 10 is a diagram which shows an example of an operation of the design device according to the present embodiment.
FIG. 11 is a diagram for describing spatial recognition using binocular vision.
FIG. 12 is a diagram for describing an evaluation method of spatial vision using binocular vision.
FIG. 13 is a diagram which shows an example of an evaluation result of the spatial vision using binocular vision.
FIG. 14 is a diagram for describing an example of the evaluation result of the spatial vision using binocular vision.
FIG. 15 is a diagram for describing another example of the lens design by the design device according to the present embodiment.
FIG. 16 is a diagram for describing another example of the lens design by the design device according to the present embodiment.

### [Description of Embodiments]

### <Embodiment>

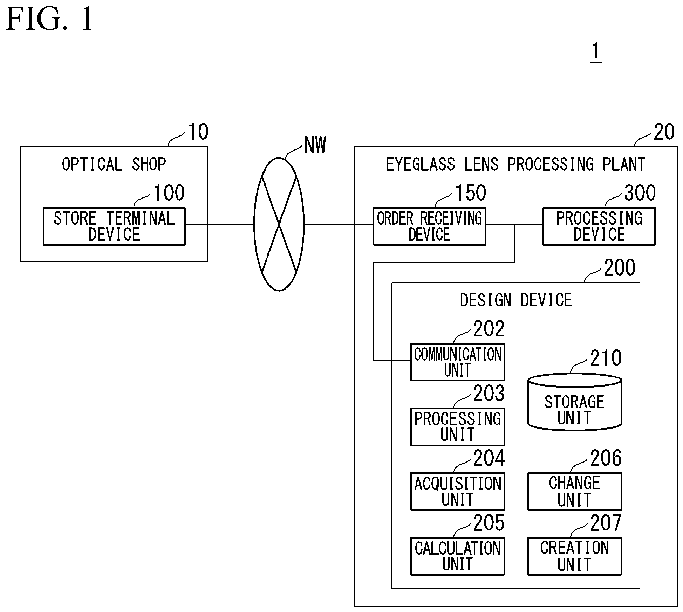

Hereinafter, an eyeglass lens processing system according to an embodiment of the present invention will be described with reference to the drawings. FIG. 1 is a diagram which shows an eyeglass lens processing system according to the present embodiment. An eyeglass lens processing system 1 includes a store terminal device 100, an order receiving device 150, a design device 200, and a processing device 300.

The store terminal device 100 and the order receiving device 150 communicate with each other via a network NW. The network NW includes, for example, the Internet, a wide area network (WAN), a local area network (LAN), a provider device, a wireless base station, and the like.

An example of the store terminal device 100 is installed in an optical shop 10. The optical shop 10 orders eyeglass lenses according to a prescription for a customer who wears eyeglasses.

Examples of the order receiving device 150, the design device 200, and the processing device 300 are installed in an eyeglass lens processing plant 20. The eyeglass lens processing plant 20 receives orders for eyeglass lenses ordered by the optical shop 10. The eyeglass lens processing plant 20 designs the ordered eyeglass lenses on the basis of the prescription. The eyeglass lens processing plant 20 manufactures eyeglass lenses by processing them on the basis of a design result.

The optical shop 10 and the eyeglass lens processing plant 20 will be described.

### [Optical shop 10]

A store terminal device 100 is installed in the optical shop 10. The store terminal device 100 may be realized in a smartphone, a mobile terminal, a personal computer, a tablet terminal device, or other information processing device. Software for ordering eyeglass lenses to the eyeglass lens processing plant 20 is installed in the store terminal device 100.

The store terminal device 100 includes a mouse, a keyboard, and the like. An employee of the optical shop 10 inputs lens data and frame data to the store terminal device 100 by operating the mouse, the keyboard, or the like.

Lens data includes, for example, prescription values, eyeglass lens wearing conditions, eyeglass lens types, layout data according to customer requests, and the like. Here, the prescription values include a base curve, a spherical refractive power, an astigmatic refractive power, an astigmatic axial direction, a prism refractive power, a prism base direction, a spherical strength, an addition strength, a pupillary distance (PD), and the like. Wearing conditions for eyeglass lenses include a distance between corneal vertexes, an anteversion angle, a frame tilt angle, and the like. Eyeglass lens types include a fixed focal length spherical surface lens, a fixed focal length aspherical surface lens, a multifocal (a bifocal or progressive) lens, a coating (a dyeing progressed, hard coating, anti-reflection coating, UV protection, or the like) lens, and the like.

Frame data includes shape data of a frame selected by a customer. The frame data is obtained by measuring a shape of a frame at the time of placing an order using a device that measures the shape of the frame. The acquired frame data is input to the store terminal device 100. **In** addition, for example, the frame data is managed by a barcode tag, and may be input to the store terminal device 100 through reading of a barcode tag attached to the frame by a barcode reader.

The store terminal device 100 creates ordering data including lens data and frame data, and creates an ordering request addressed to the design device 200 including the created ordering data. The store terminal device 100 transmits the created ordering request to the design device 200.

### [Eyeglass lens processing plant 20]

The eyeglass lens processing plant 20 includes the order receiving device 150, the design device 200, and the processing device 300. In the eyeglass lens processing plant 20, a local area network (LAN) centered about the order receiving device 150 is constructed, and the design device 200 and the processing device 300 are connected to the LAN.

The order receiving device 150 may be realized in a smartphone, a mobile terminal, a personal computer, a tablet terminal device, or other information processing device. Software for receiving orders for eyeglass lenses from the optical shop 10 is installed in the order receiving device 150. The order receiving device 150 receives the ordering request transmitted by the store terminal device 100. The order receiving device 150 acquires ordering data included in the ordering request. The order receiving device 150 receives an order for eyeglass lenses on the basis of the acquired ordering data.

In the eyeglass lens processing plant 20, after the order receiving device 150 acquires the ordering data, both inner and outer surfaces of a raw block piece are designed and processed to meet a prescription for a wearer.

In addition, in the eyeglass lens processing plant 20, in order to improve productivity, a strength of an entire production range is divided into a plurality of groups, and a semi-finished blank with an outer surface (convex) curve shape (spherical shape or aspherical shape) and a lens diameter, which is suitable for a strength range of each group, may be prepared in advance in preparation for an eyeglass lens order.

In this case, the eyeglass lens processing plant 20 manufactures an eyeglass lens suitable for the prescription for a wearer simply by performing inner surface (concave surface) processing (and lens matching). The order receiving device 150 creates a design request addressed to the design device 200, which includes the ordering data. The order receiving device 150 transmits the created design request to the design device 200.

The design device 200 may be realized in a smartphone, a mobile terminal, a personal computer, a tablet terminal device, or other information processing device. The design device 200 receives the design request transmitted by the order receiving device 150. The design device 200 acquires order data included in the received design request. A program for designing an eyeglass lens on the basis of the order data is installed in the design device 200.

The design device 200 creates lens design data on the basis of the lens data included in the acquired ordering data, and creates lens matching data on the basis of frame data included in the ordering data. An eyeglass lens design method will be described below.

The design device 200 creates a processing request addressed to the processing device 300, which includes the created lens design data and lens matching data. The design device 200 transmits the created processing request to the processing device 300.

The processing device 300 is realized in a smartphone, a mobile terminal, a personal computer, a tablet terminal device, or other information processing device.

An operator sets the block piece in a processing machine (not shown) such as a curve generator, and instructs the processing device 300 to start processing.

The processing device 300 receives the processing request transmitted by the design device 200. The processing device 300 acquires the lens design data and the lens matching data included in the received processing request. The processing device 300 drives and controls the processing machine on the basis of the acquired lens design data and lens matching data.

The processing machine grinds and polishes inner and outer surfaces of a block piece according to the lens design data to manufacture inner and outer surface shapes of an eyeglass lens.

After that, various coatings such as dyeing, hard coating, anti-reflection film, and UV protection are applied to the eyeglass lens according to the ordering data.

After the coating, an outer peripheral surface of the uncut lens after the manufacture of the inner and outer surface shapes is processed into a peripheral edge shape corresponding to a target lens shape. This processing may be performed at the eyeglass lens processing plant 20 or may be performed at the optical shop 10. As a result, the eyeglass lens is completed and delivered to the optical shop 10.

### [Eyeglass lens design method]

The eyeglass lens design method will be described. In the following description, it is assumed that a pair of aspherical lenses with rotational symmetry or axial symmetry around a component of a fixed focal length lens for a distance prescription comprising the fixed focal length lens or a progressive refractive lens, which are a pair of eyeglass lenses with different prescription strengths such as spherical strengths prescribed for anisotropic wearers on the left and right, are designed. In the following description, a case in which a spherical strength is applied as an example of the prescription strength will be continuously described.

In general, an eyeglass lens has more aberration as it goes from the center to the periphery, and a quality of the visual performance deteriorates due to the aberration. Aberrations in the periphery can be suppressed by making the front surface, the rear surface, or both surfaces thereof (the front surface and the rear surface) aspherical. Even if optimization is performed using an aspherical shape, it is not possible to make all aberrations zero in a configuration with two surfaces like an eyeglass lens.

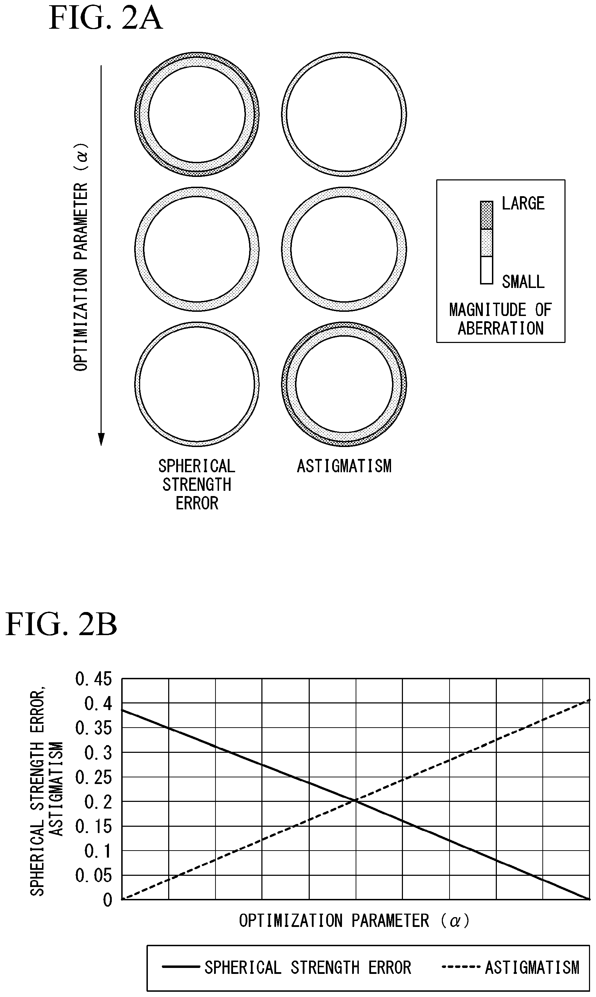

FIG. 2A is a diagram which shows an example of a relationship between an optimization parameter and a spherical strength error and astigmatism. FIG. 2A shows how the spherical strength error and the astigmatism at a specified point in the periphery change when an optimization parameter (α) is changed.

Here, the optimization parameter (α) is according to the claimed subject matter, a parameter (a design parameter) used to adjust a design target. The optimization parameter (α) is a parameter that changes a ratio between the spherical strength error and the astigmatism of the design target (weighting of the two targets during optimization). Here, targets are target values of a spherical strength and astigmatism on an axis to be optimized when an aspherical surface is optimized. A difference from the prescription strength for a position r in a radial direction on the axis is represented by a spherical strength error ΔP (r) and astigmatism ΔC (r), and optimization is performed such that a sum of absolute values of all aberrations (an error function) E(r)=|ΔP(r)|+|ΔC(r)| is minimized.

An error function of an optimization target that minimizes |ΔP(r)| and |ΔC(r)| according to a value of a design parameter α is represented by the following equation. $E \left(r, α\right) = α \times \left|ΔP\left(r\right)\right| + \left(1-α\right) \left|ΔC\left(r\right)\right|$

For the position r in the radial direction, an overall error function on the axis is obtained and optimization of aspheric coefficients is performed by weighting r and summing. The weighting for r can be changed according to a type of a product, a shape and a size of the lens to be optimized, and the like.

In the aberrations of the lens, the spherical strength error and the astigmatism greatly affect vision, and it is possible to perform a design with emphasis on the spherical strength error or astigmatism by changing an optimization target.

FIG. 2B shows an example of the relationship between the optimization parameter and the spherical strength error and astigmatism. In FIG. 2B, the horizontal axis is the optimization parameter (α), and the vertical axis is the spherical strength error and astigmatism at a position specified from an optical center. The spherical strength error is represented by a solid line and the astigmatism is represented by a dashed line.

According to FIG. 2, it can be seen that the astigmatism increases as the spherical strength error decreases, and the astigmatism decreases as the spherical strength error increases.

From the description above, it can be seen that the ratio between the spherical strength error and the astigmatism can be changed by changing the optimization parameter (α).

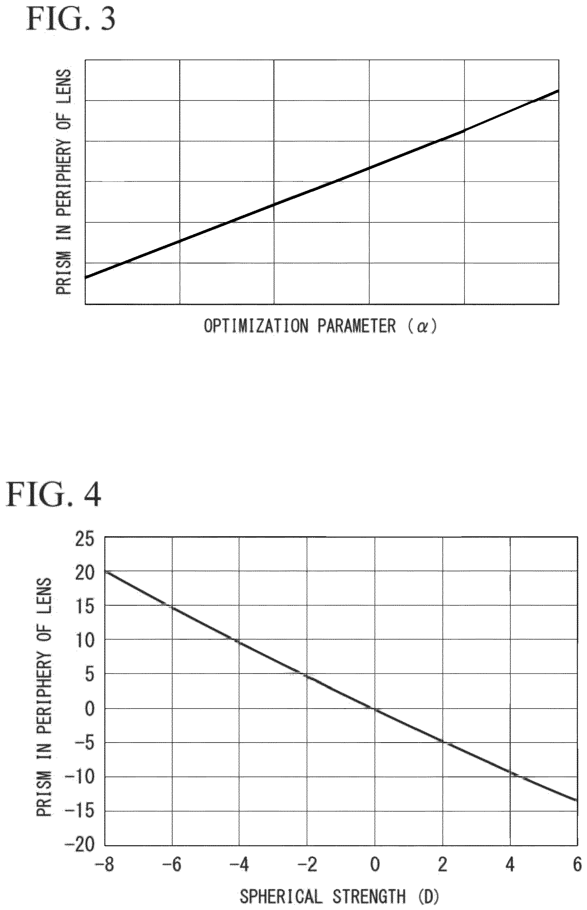

FIG. 3 shows an example of a relationship between the optimization parameter and a prism in a periphery of the lens. In FIG. 3, the horizontal axis is the optimization parameter (α), and the vertical axis is the prism in the periphery of the lens. According to FIG. 3, a prism value (amount) of the periphery of the lens changes linearly with respect to the optimization parameter (α).

From the description above, it can be seen that it is possible to change the prism value (amount) of the periphery of the lens by changing the optimization parameter (α).

FIG. 4 shows an example of a relationship between a spherical strength (D) and the prism in the periphery of the lens. **In** FIG. 4, the horizontal axis is the spherical strength (D) and the vertical axis is the prism in the periphery of the lens. FIG. 4 represents the prism value (amount) of the periphery of the lens when optimization is performed with the same optimization parameter (α). It is set to be positive when rays of light from the eyes are refracted in a direction of divergence, and is set to be negative when the rays of light are refracted in a direction of convergence.

According to FIG. 4, the prism value (amount) of the periphery of the lens monotonically decreases as the spherical strength (D) increases. In other words, it can be seen that the prism value (amount) of the periphery of the lens changes depending on a prescription (spherical strength (D)) of the lens, and an absolute value of the prism value (amount) of the periphery of the lens also increases as an absolute value of the spherical strength (D) increases.

From the description above, when the prescriptions (strengths) of both eyes are different, there is a difference in prism value (amount) in the peripheries of the lenses for both eyes.

The design device 200 acquires order data included in the design request received by the order receiving device 150. The design device 200 derives a design parameter of a reference design on the basis of lens data included in the acquired ordering data. The design device 200 performs a reference design on the basis of the derived design parameter of the reference design. For example, it is assumed that a reference design of a fixed focal length lens is a design for a case in which the prescriptions of both eyes are the same, and the design differs depending on a product.

The design device 200 reduces the difference in prism amount of the lenses for both eyes in the peripheries of the lenses compared to in the reference design when the prescriptions of both eyes are different. The design device 200 acquires information specifying a left prism amount corresponding to a left-eye strength and information specifying a right prism amount corresponding to a right-eye strength. The design device 200 calculates a computed value of the left prism amount and the right prism amount on the basis of the acquired information specifying the left prism amount and the acquired information specifying the right prism amount.

The design device 200 derives a design parameter change amount from the design parameter of the reference design on the basis of the computed value of the left prism amount and the right prism amount. The design device 200 changes the design parameter on the basis of the derived design parameter change amount. The design target is changed by changing the design parameter.

The design device 200 creates lens design data including a design parameter, a design target, and the like. Returning to FIG. 1, the description will continue.

Details of the design device 200 will be described.

The design device 200 includes a communication unit 202, a processing unit 203, an acquisition unit 204, a calculation unit 205, a change unit 206, a creation unit 207, and a storage unit 210.

The communication unit 202 is realized by a communication module. The communication unit 202 communicates with communication devices of the eyeglass lens processing plant 20 such as the order receiving device 150 and the processing device 300 via the LAN. The communication unit 202 performs communication using a communication method such as a wired LAN. **In** addition, the communication unit 202 may perform communication using a wireless communication method such as a wireless LAN, Bluetooth (a registered trademark), or LTE (a registered trademark).

Specifically, the communication unit 202 receives the design request transmitted by the order receiving device 150. The communication unit 202 acquires the processing request output by the creation unit 207. The communication unit 202 transmits the acquired processing request to the processing device 300.

The storage unit 210 is realized by a hard disk drive (HDD), a flash memory, a random access memory (RAM), a read only memory (ROM), and the like. The storage unit 210 stores the program for designing an eyeglass lens and information indicating a relationship between the spherical strength (D) and the prism in the periphery of the lens.

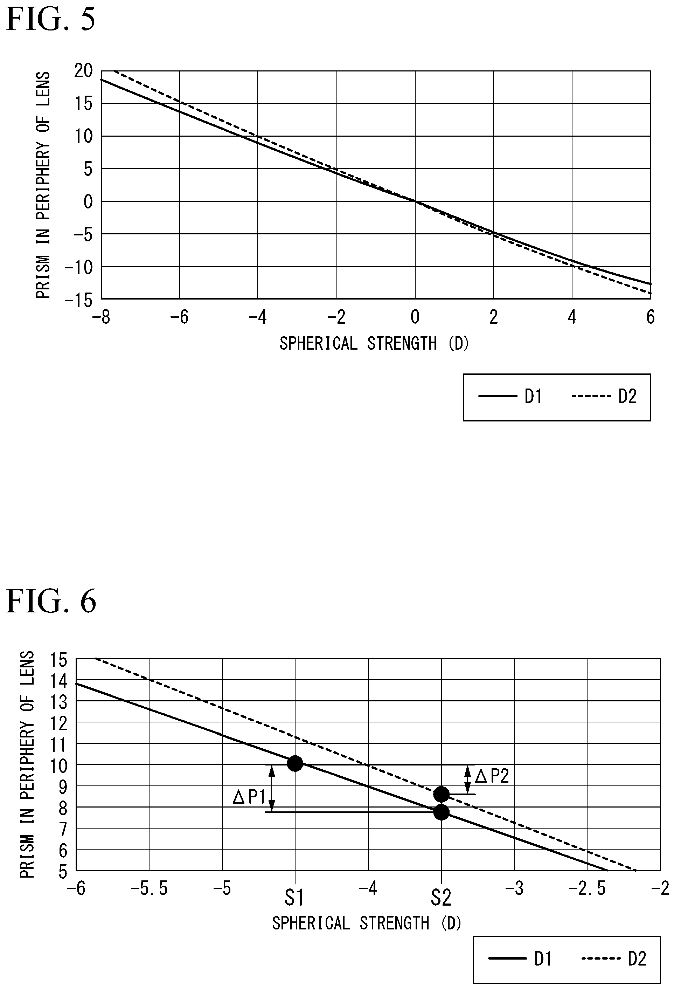

FIG. 5 is a diagram which shows an example of the information indicating the relationship between the spherical strength (D) and the prism in the periphery of the lens stored by the design device according to the present embodiment. In FIG. 5, the horizontal axis is the spherical strength (D) and the vertical axis is the prism in the periphery of the lens. FIG. 5 shows, as an example, the relationship between the spherical strength (D) and the prism in the periphery of the lens for each of lenses D1 and D2. A lens D1 is indicated by a solid line, and a lens D2 is indicated by a dashed line. It is set to be positive when the rays of light from the eyes are refracted in the direction of divergence, and to be negative when the rays of light are refracted in the direction of convergence.

An example of the periphery of the lens is preferably a position equal to or more than 5 mm and equal to or less than 50 mm in a horizontal direction from an optical center of the lens. An example of the periphery of the lens is more preferably a position equal to or more than 10 mm and equal to or less than 30 mm in the horizontal direction from the optical center of the lens.

Examples of the lens D1 and the lens D2 are aspherical lenses having rotational symmetry or axial symmetry around the component of a fixed focal length lens for the distance prescription comprising the fixed focal length lens or progressive refractive lens. Each of the lens D1 and the lens D2 is optimized by adjusting the design target with a different optimization parameter (α).

According to FIG. 5, it can be seen that the prism value (amount) of the periphery of the lens monotonically decreases as the spherical strength (D) increases for both the lens D1 and the lens D2. It can be seen that the absolute value of a prism value (amount) also increases as the absolute value of the spherical strength (D) increases. It can be seen that the lens D1 and the lens D2 have different amounts of change in prism value (amount) of the periphery of the lens with respect to the spherical strength (D).

From the description above, the prism value (amount) of the periphery of the lens changes depending on the prescription of the lens such as the spherical strength (D). When the prescriptions for both eyes are different, there is a difference in prism value (amount) of the lens. Returning to FIG. 1, the description continues.

The processing unit 203 acquires the design request received by the communication unit 202 and acquires ordering data included in the acquired design request. The processing unit 203 derives the design parameter of the reference design on the basis of lens data included in the ordering data. The design device 200 performs reference design on the basis of the derived design parameter of the reference design. An example of the reference design is a design of a case in which the prescriptions for both eyes are the same. This design differs depending on a product. The processing unit 203 creates lens matching data on the basis of frame data included in the ordering data.

The acquisition unit 204 acquires the design request received by the communication unit 202 and acquires the ordering data included in the acquired design request. The acquisition unit 204 acquires the spherical strength included in the lens data included in the ordering data. The spherical strength includes information specifying a spherical strength of the left eye and information specifying the right eye.

On the basis of the information specifying the spherical strength of the left eye and the information specifying the spherical strength of the right eye, the acquisition unit 204 acquires information specifying a left prism value (amount) corresponding to the spherical strength of the left eye and information specifying a right prism value (amount) corresponding to the spherical strength of the right eye from the information indicating the relationship between the spherical strength (D) and the prism in the periphery of the lens stored in the storage unit 210.

FIG. 6 is a diagram which shows an example of processing of the design device according to the present embodiment. In FIG. 6, the horizontal axis is the spherical strength (D) and the vertical axis is the prism in the periphery of the lens. FIG. 6 shows a case in which a spherical strength of one eye is set to S1 and a spherical strength of the other eye is set to S2 for the lens D1 among the lenses D1 and D2 optimized by adjusting each of two types of optimization parameters (α) shown in Fig. 5.

The acquisition unit 204 acquires 10 as a prism value (amount) corresponding to the spherical strength S1, and acquires 8 as a prism value (amount) corresponding to the spherical strength S2. Returning to FIG. 1, the description continues.

The calculation unit 205 acquires information specifying the left prism value (amount) corresponding to the spherical strength of the left eye and information specifying the right prism value (amount) corresponding to the spherical strength of the right eye acquired by the acquisition unit 204.

The calculation unit 205 derives a computed value of the left prism value (amount) and right prism value (amount) on the basis of the acquired information specifying the left prism value (amount) corresponding to the spherical strength of the left eye and information specifying the right prism value (amount) corresponding to the spherical strength of the right eye. An example of the computed value is a difference between the left prism value (amount) and the right prism value (amount).

In the following description, as an example of the computed value, a case in which the difference between the left prism value (amount) and the right prism value (amount) is applied will be continuously described.

Description will be provided with reference to FIG. 6. As shown in FIG. 6, the prism value (amount) corresponding to the spherical strength S1 is 10, and the prism value (amount) corresponding to the spherical strength S2 is 8. The calculation unit 205 obtains 2 as the difference ΔP1 between the prism value (amount) corresponding to the spherical strength S1 and the prism value (amount) corresponding to the spherical strength S2.

The change unit 206 acquires the difference ΔP1 between the left prism value (amount) and the right prism value (amount) from the calculation unit 205. The change unit 206 changes a design parameter of the right-eye aspherical lens and/or the left-eye aspherical lens from the design parameter of the reference design on the basis of the acquired difference ΔP1 between the left prism value (amount) and the right prism value (amount). The change unit 206 derives the design parameter change amount on the basis of the difference ΔP1 between the left prism value (amount) and the right prism value (amount). The design parameter change amount is an amount of change in design parameter from the design parameter of the reference design derived on the basis of the difference between the left prism value (amount) and the right prism value (amount). The difference ΔP1 between the left prism value (amount) and the right prism value (amount) may be associated with the design parameter change amount.

For example, the change unit 206 sets the design parameter change amount to 0 when the difference ΔP1 between the left prism value (amount) and the right prism value (amount) is 0. The change unit 206 sets the design parameter change amount to 1 when the difference ΔP1 between the left prism value (amount) and the right prism value (amount) is 0.1. The change unit 206 sets the design parameter change amount to 2 when the difference ΔP1 between the left prism value (amount) and the right prism value (amount) is 0.2.

However, the change unit 206 sets the derived design parameter change amount up to a limit value on the basis of the limit value of the design parameter change amount.

Specifically, a case in which the limit value of the design parameter change amount is set to 2 will be described. The change unit 206 sets the design parameter change amount to 1 when the difference ΔP1 between the left prism value (amount) and the right prism value (amount) is 0.1. The change unit 206 sets the design parameter change amount to 2 when the difference ΔP1 between the left prism value (amount) and the right prism value (amount) is 0.2. When the difference ΔP1 between the left prism value (amount) and the right prism value (amount) is 0.3, since the design parameter change amount is 3, which exceeds the limit value of 2, the change unit 206 sets the design parameter change amount to 2.

As shown in FIG. 6, a case in which an absolute value of the spherical strength S1 is greater than an absolute value of the spherical strength S2 will be described. The change unit 206 acquires a difference ΔP1 in prism value (amount) calculated on the basis of a prism value (amount) of the periphery of the lens corresponding to the spherical strength S1 of the lens D1 and a prism value (amount) of the periphery of the lens corresponding to the spherical strength S2 of the lens D1.

On the other hand, when the prism value (amount) of the periphery of the lens corresponding to the spherical strength S2, which has the smaller absolute value of the spherical strength, is acquired from the lens D2, which has a different design parameter (α) (of the reference design) from the lens D1, a difference ΔP2 in prism value (amount) is calculated on the basis of the prism value (amount) of the periphery of the lens corresponding to the spherical strength S1 of the lens D1 and the prism value (amount) of the periphery of the lens corresponding to the spherical strength S2 of the lens D2.

The prism value (amount) corresponding to the spherical strength S2 of the lens D2 is 8.5. For this reason, the difference ΔP2 in prism value (amount) is set to 1.5 on the basis of the prism value (amount) of the periphery of the lens corresponding to the spherical strength S1 of the lens D1 and the prism value (amount) of the periphery of the lens corresponding to the spherical strength S2 of the lens D2.

Since the difference ΔP2 in prism value (amount) is less than the difference ΔP1 in prism value (amount), regarding the spherical strength S2, the difference in prism value (amount) of the lenses for both eyes is reduced when the lens D2 is used than when the lens D1 is used. In this case, the change unit 206 changes the spherical strength S2 to a design parameter of the lens D2.

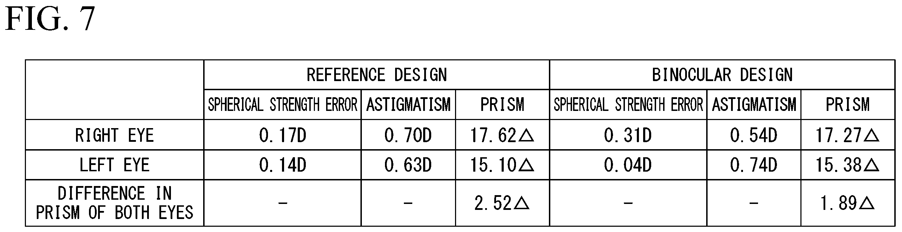

FIG. 7 is a diagram which shows an example of a lens design by the design device according to the present embodiment. FIG. 7 shows the spherical strength error, astigmatism, and prism for the right eye and left eye in the reference design and the binocular design, respectively. Furthermore, for the prism, a difference in prism for both eyes is shown. "Δ" is a unit representing a prism amount in prism diopter.

The binocular design is a design in which a design for both eyes is changed from the reference design by changing a design parameter from the design parameter of the reference design. The prism amount (value) is a calculated value at a position 30 mm from a center of the lens. As an example, a case in which the prescription strength is S-4.00D for the right eye and S-3.50D for the left eye is shown.

According to FIG. 7, the spherical strength error is changed from 0.17D of the reference design to 0.31D of the binocular design for a right-eye lens, and is changed from 0.14D of the reference design to 0.04D of the binocular design for a left-eye lens. The astigmatism is changed from 0.70D of the reference design to 0.54D of the binocular design for the right-eye lens, and is changed from 0.63D of the reference design to 0.74D of the binocular design for the left-eye lens. The prism value (amount) is changed from 17.62Δ of the reference design to 17.27Δ of the binocular design for the right-eye lens, and is changed from 15.10Δ of the reference design to 15.38Δ of the binocular design for the left-eye lens. The difference in prism for both eyes is changed from 2.52Δ of the reference design to 1.89Δ of the binocular design.

From the description above, it can be seen that an absolute value of the difference in prism amount of both eyes is reduced from 2.52Δ of the reference design to 1.89Δ of the binocular design by changing the design parameter (α) to change the design for both eyes from the reference design to the binocular design.

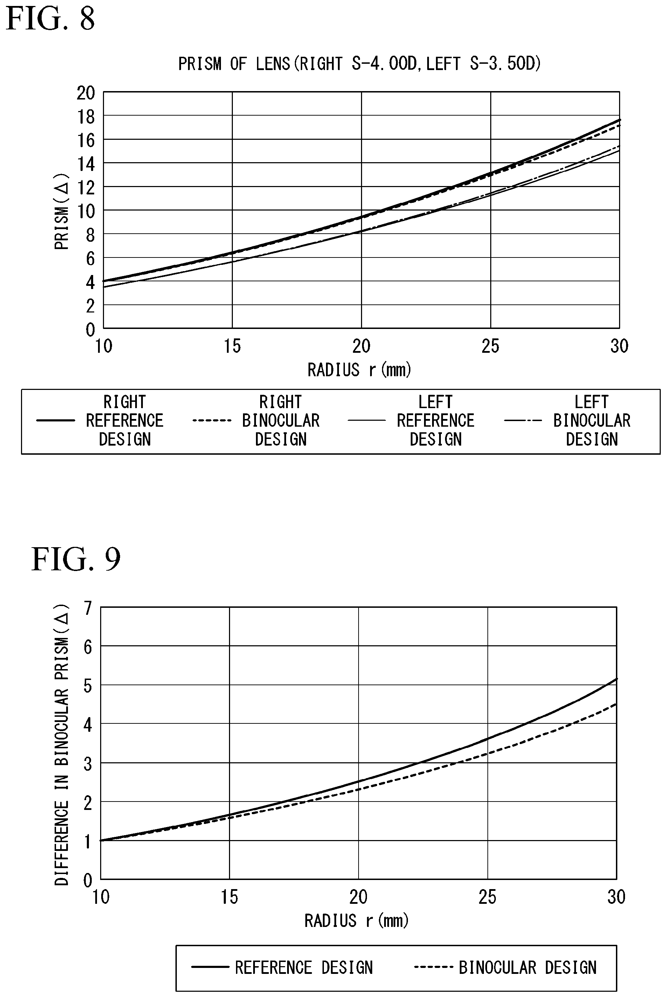

FIG. 8 is a diagram which shows an example of the lens design by the design device according to the present embodiment. **In** FIG. 8, the horizontal axis is a radius r (mm) and the vertical axis is the prism. FIG. 8 shows a relationship between the radius and prism under the same conditions as in FIG. 7. In the reference design, the right-eye lens is represented by a black solid line, and the left-eye lens is represented by a gray solid line. In the binocular design, the right-eye lens is represented by a black dashed line and the left-eye lens is represented by a gray dashed line.

According to FIG. 8, in both the reference design and the binocular design, a prism (Δ) increases as the radius increases for both the right-eye lens and the left-eye lens. In the reference design and the binocular design, the prism (Δ) of the right-eye lens has a larger value than the prism (Δ) of the left-eye lens.

At a radius of 15 mm or more, the difference between the prism value (amount) of the right-eye lens in the reference design and the prism value (amount) of the right-eye lens in the binocular design is remarkable. At a radius of 20 mm or more, the difference between the prism value (amount) of the left-eye lens in the reference design and the prism value (amount) of the left-eye lens in the binocular design s remarkable.

FIG. 9 is a diagram which shows an example of the lens design by the design device according to the present embodiment. In FIG. 8, the horizontal axis is the radius r (mm) and the vertical axis is a difference (Δ) between the prisms for both eyes. FIG. 9 shows a relationship between the radius r and the difference in prism for both eyes under the same conditions as in FIG. 7. In the difference (Δ) between the prisms for both eyes, the reference design is represented by a solid line and the binocular design is represented by a dashed line.

The difference in prism value (amount) between both eyes in the reference design is a difference between the prism value (amount) of the right-eye lens and the prism value (amount) of the left-eye lens in the reference design. The difference in prism value (amount) between both eyes in the binocular design is a difference between the prism value (amount) of the right-eye lens and the prism value (amount) of the left-eye lens in the binocular design.

According to FIG. 9, it can be seen that the prism value (amount) of both eyes in the binocular design is smaller than the difference in prism value (amount) between both eyes in the reference design. It can be seen that the difference increases as the radius r increases. Returning to FIG. 1, the description will be continued.

The creation unit 207 acquires lens design data and information specifying the design parameter change amount from the change unit 206. The creation unit 207 acquires lens matching data from the processing unit 203. The creation unit 207 creates a processing request addressed to the processing device 300, which includes the acquired lens design data, the information specifying the design parameter change amount, and the lens matching data. The creation unit 207 outputs the created processing request to the communication unit 202.

The processing unit 203, the acquisition unit 204, the calculation unit 205, the change unit 206, and the creation unit 207 are realized by, for example, a hardware processor such as a central processing unit (CPU) executing a computer program (the program for designing an eyeglass lens) (software) stored in the storage unit 210.

In addition, some or all of these functional units may be realized by hardware (a circuit unit; including circuitry) such as large scale integration (LSI), an application specific integrated circuit (ASIC), a field-programmable gate array (FPGA), a graphics processing unit (GPU), or may be realized by software and hardware in cooperation.

The computer program may be stored in advance in a storage device such as an HDD or flash memory, or may be stored in a removable storage medium such as a DVD or CD-ROM and installed by the storage medium being attached to a drive device.

### (Operation of design device 200)

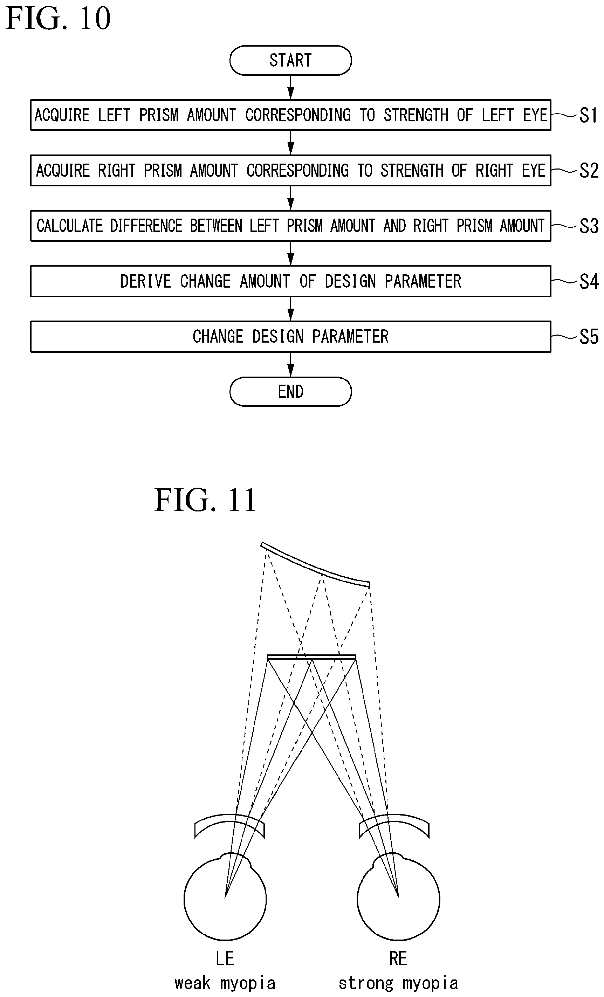

FIG. 10 shows an example of an operation of the design device according to the present embodiment. Here, the design device 200 receives the design request transmitted by the order receiving device 150, derives a design parameter of the reference design on the basis of information included in the received design request, and describes an operation after the reference design is performed on the basis of the derived design parameter of the reference design.

### (Step S1)

In the design device 200, the acquisition unit 204 acquires the design request received by the communication unit 202 and acquires ordering data included in the acquired design request. The acquisition unit 204 acquires lens data included in the ordering data, and acquires information specifying a prism value (amount) of the left eye in the reference design corresponding to the spherical strength of the left eye from the information indicating the relationship between the spherical strength and the prism in the periphery of the lens stored in the storage unit 210 on the basis of the information specifying the spherical strength of the left eye included in the acquired lens data.

### (Step S2)

In the design device 200, the acquisition unit 204 acquires information specifying a prism value (amount) of the right eye in the reference design corresponding to the spherical strength of the right eye from the information indicating the relationship between the spherical strength and the prism in the periphery of the lens stored in the storage unit 210 on the basis of the information specifying the spherical strength of the right eye included in the lens data.

### (Step S3)

In the design device 200, the calculation unit 205 acquires information specifying a left prism value (amount) corresponding to the spherical strength of the left eye in the reference design acquired by the acquisition unit 204 and information specifying a right prism value (amount) corresponding to the prescription strength of the right eye in the reference design. The calculation unit 205 calculates the difference ΔP1 between the left prism value (amount) and the right prism value (amount) on the basis of the acquired information specifying the left prism value (amount) corresponding to the spherical strength of the left eye and information specifying the right prism value (amount) corresponding to the prescription strength of the right eye.

### (Step S4)

In the design device 200, the change unit 206 acquires the difference ΔP1 between the left prism value (amount) and the right prism value (amount) from the calculation unit 205. The change unit 206 derives the design parameter change amount of the right-eye lens and/or the left-eye lens from the design parameter of the reference design on the basis of the acquired difference ΔP1 between the left prism value (amount) and the right prism value (amount).

### (Step S5)

In the design device 200, the change unit 206 changes the design parameter of the right-eye lens and/or the left-eye lens from the design parameter of the reference design on the basis of the derived design parameter change amount.

The spatial recognition using binocular vision will be described.

FIG. 11 is a diagram for describing spatial recognition using binocular vision. FIG. 11 shows results of ray of light tracing from each eyeball of a left eye (LE) and a right eye (RE). Here, the left eye (LE) is low myopia and the right eye (RE) is high myopia.

Spatial recognition using binocular vision is performed by using binocular vision differences on a retina, convergence of both eyes, and the like as cues. Therefore, it is possible to evaluate a position of an object point to be recognized using binocular vision by tracing a ray of light to the object point based on a position of a pupil or a rotation point of an eyeball and calculating an intersection of rays of light from both eyes.

When an eyeglass lens is worn, since the ray of light from the pupil or the rotation point of the eyeball is refracted by the lens, a gap occurs between the position of an object to be recognized using binocular vision and its actual position. As shown in FIG. 11, it is possible to evaluate how a space is recognized according to binocular vision by performing ray of light tracing from eyeballs of both eyes to a group of object points on a real space.

In particular, when the prescription strength (spherical strength) differs between the right eye and the left eye as shown in FIG. 11, the absolute value of the prism value (amount) in the periphery of the lens is greater with a larger absolute value of the prescription strength than with a smaller absolute value of the prescription strength. Therefore, while an eyeglass lens with different prescription strengths (spherical strengths) between the right eye and the left eye is worn, the space has a larger positional difference between left and right object points than in a naked eye state, and a wearer perceives the space as if it were distorted.

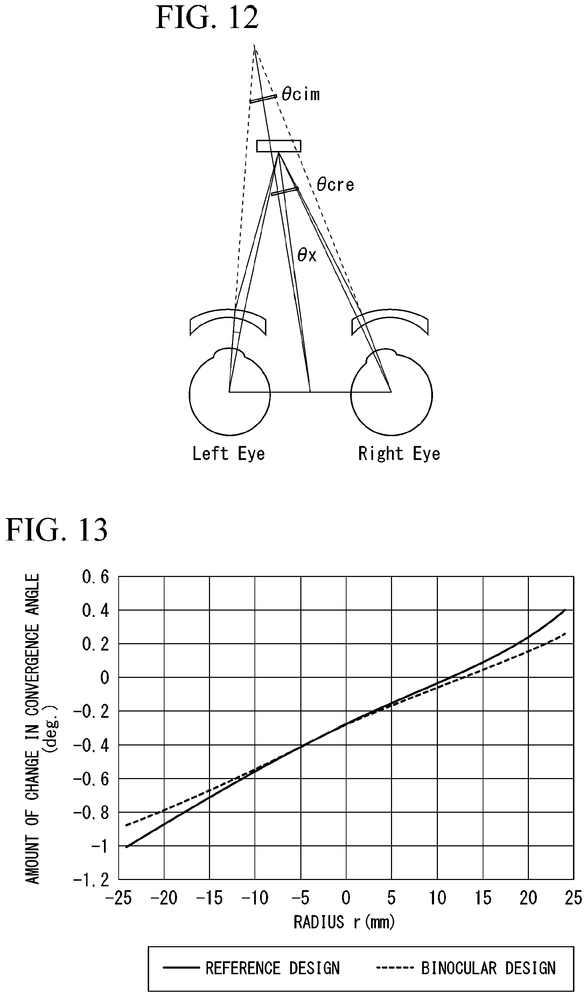

A method of evaluating spatial vision using binocular vision will be described. FIG. 12 is a diagram for describing an evaluation method of spatial vision using binocular vision. In a view using binocular vision, a convergence angle without eyeglasses is θcre, and a convergence angle with eyeglasses is θcim.

A change in convergence angle (θcim-θcre) with eyeglasses with respect to without eyeglasses in the view using binocular vision is calculated. The convergence angle is associated with a sense of distance perceived according to binocular vision. For this reason, as the difference between the convergence angle θcre without eyeglasses and the convergence angle θcim with eyeglasses worn is reduced, the spatial vision can be closer to vision without eyeglasses.

In addition, the difference in convergence angle between the right eye and the left eye being reduced means a difference in sense of distance between left and right spaces being reduced. For this reason, it is assumed that the spatial distortion be mitigated as the difference in convergence angle between the right and left eyes is reduced.

An example of an evaluation result of spatial vision using binocular vision will be described.

FIG. 13 is a diagram which shows an example 1 of the evaluation result of spatial vision using binocular vision. In FIG. 13, the horizontal axis is the radius r (mm), and the vertical axis is the amount of change in convergence angle (deg). The amount of change (deg) in convergence angle is represented by a solid line in the reference design and is represented by a dashed line in the binocular design.

The amount of change in convergence angle in the reference design is the change in convergence angle (θcim-θcre) with eyeglasses with respect to without eyeglasses in the view using binocular vision in the reference design. The amount of change in convergence angle in the binocular design is the change in convergence angle (θcim-θcre) with eyeglasses with respect to without eyeglasses in the view using binocular vision in binocular design.

According to FIG. 13, it can be seen that the amount of change (deg) in convergence angle in both the reference design and the binocular design increases as the radius increases. It can be seen that a difference between the amount of the change in convergence angle in the reference design and the amount of the change in convergence angle in the binocular design increases as an absolute value of the radius increases.

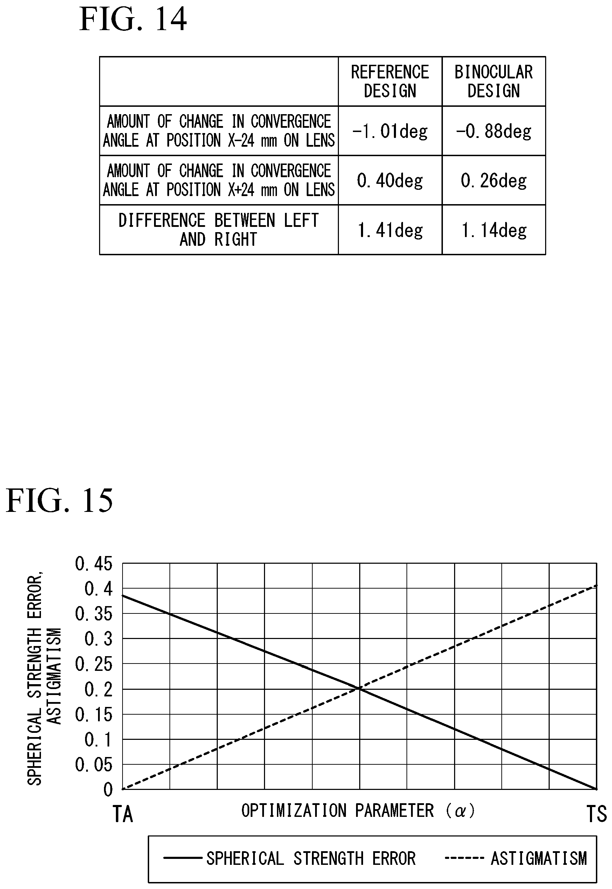

FIG. 14 is a diagram for describing an example of the evaluation result of spatial vision using binocular vision. FIG. 14 shows the amount of change in convergence angle at a position X-24mm on the lens, the amount of change in convergence angle at a position X+24mm on the lens, and a difference in the amount of change in convergence angle on the left and right in each of the reference design and the binocular design.

According to FIG. 14, the amount of change in convergence angle at the position X-24mm on the lens is changed from -1.01 [deg] of the reference design to -0.88 [deg] of the binocular design. The amount of change in convergence angle at the position X+24 mm on the lens is changed from 0.40 [deg] of the reference design to 0.26 [deg] of the binocular design. A difference between the left and right is changed from 1.41 [deg] of the reference design to 1.14 [deg] of the binocular design.

From the description above, the amount of change in convergence angle at the position X-24mm on the lens has a decreased absolute value in the binocular design compared to in the reference design. The amount of change in convergence angle at the position X+24 mm on the lens has a decreased absolute value in the binocular design compared to in the reference design. Compared to in the reference design, the absolute value of the amount of the change in convergence angle in the binocular design is decreased in both the amount of change in convergence angle at the position X-24 mm on the lens and the amount of change in convergence angle at the position X+24 mm on the lens. For this reason, the binocular design provides a sense of distance closer to without eyeglasses than the reference design.

In addition, when the amount of change in convergence angle at the position X-24mm on the lens and the amount of change in convergence angle at the position X+24mm on the lens are compared, the difference is 1.14 deg in the binocular design with respect to 1.41 deg in the reference design, which is decreasing. For this reason, distortion of spatial recognition using binocular vision can be mitigated in binocular design compared to in the reference design.

In the embodiment described above, a case in which the eyeglass lens processing system 1 includes the optical shop 10 that orders an eyeglass lens according to a prescription for a customer (a wearer), and an eyeglass lens processing plant 20 that receives an order from the optical shop 10 and manufactures an eyeglass lens has been described, but the present invention is not limited to this example.

For example, an order to the eyeglass lens processing plant 20 may be made through a predetermined network such as the Internet or data transmission by FAX or the like. Ordering parties may include ophthalmologists and general consumers.

In the embodiment described above, a case in which the difference in prism value (amount) of the lenses for both eyes is calculated on the basis of the relationship between the spherical strength (D) and the prism in the periphery of the lens, as an example, for two types of lenses, the lens D1 and the lens D2 have been described, but the present invention is not limited to this example.

For example, the difference in prism value (amount) of the lenses for both eyes may also be calculated on the basis of the relationship between the spherical strength (D) and the prism in the periphery of the lens for three or more types of lenses.

In the embodiment described above, as an example, a case in which a lens for acquiring the prism value (amount) in the periphery of the lens corresponding to the spherical strength S2 is changed from the lens D1 to the lens D2 has been described, but the present invention is not limited to this example.

For example, a lens for acquiring the prism value (amount) in the periphery of the lens corresponding to the spherical strength S1 may be changed, or a lens for acquiring the prism value (amount) in the periphery of the lens corresponding to both the spherical strength S1 and the spherical strength S2 may also be changed.

In the embodiment described above, the design device 200 may also derive the optimization target as follows.

A design target adjusted by the optimization parameter (α) of the reference design in the reference design is set to T0.

A design target adjusted by the optimization parameter (α) of the right-eye lens is set to TR, and a design target adjusted by the optimization parameter (α) of the left-eye lens is set to TL. In that case, Equations (1) and (2) are established. $TR = T 0 + dt 1$ (1) $TL = T 0 + dt 2$ (2)

The acquisition unit 204 acquires information specifying the right prism value (amount) at a position 5 mm or more and 50 mm or less from the optical center of the lens. The acquisition unit 204 preferably acquires information specifying the right prism value (amount) at a position of 5 mm or more and 50 mm or less in the horizontal direction from the optical center of the lens. The acquisition unit 204 more preferably acquires information specifying the right prism value (amount) at a position 10 mm or more and 30 mm or less in the horizontal direction from the optical center of the lens.

The acquisition unit 204 acquires information specifying the left prism value (amount) at a position 5 mm or more and 50 mm or less from the optical center of the lens. The acquisition unit 204 preferably acquires information specifying the left prism value (amount) at a position of 5 mm or more and 50 mm or less in the horizontal direction from the optical center of the lens. The acquisition unit 204 more preferably acquires information specifying the left prism value (amount) at a position 10 mm or more and 30 mm or less in the horizontal direction from the optical center of the lens.

The calculation unit 205 acquires information specifying the right prism value (amount) and information specifying the left prism value (amount) from the acquisition unit 204. The calculation unit 205 calculates a difference between the right prism value (amount) and the left prism value (amount) on the basis of the acquired information specifying the right prism value (amount) and the acquired information specifying the left prism value (amount).

The change unit 206 acquires information specifying the difference between the right prism value (amount) and the left prism value (amount) calculated by the calculation unit 205. On the basis of the acquired information specifying the difference between the right prism value (amount) and the left prism value (amount), the change unit 206 obtains values of dt1 and dt2 so that the difference is reduced.

The change unit 206 may set one of the values of dt1 and dt2 to 0 and change the optimization parameter (α) that adjusts a design target of the other of dt1 and dt2, which is not 0. The change unit 206 may also change the optimization parameter (α) that adjusts design targets of both dt1 and dt2.

In the design device 200, the calculation unit 205 may calculate the values of dt1 and dt2 in advance, and the change unit 206 may perform optimization on the lens by adjusting the design targets on the basis of the values of dt1 and dt2 calculated in advance. In addition, the change unit 206 may calculate the difference in prism value (amount) when optimization of the lens is performed, and incorporate a process that minimizes the difference in prism value (amount) into an optimization design of the lens.

However, if only the prism values (amounts) are combined, the aberration of the lens may increase. For this reason, a limit for the design target may also be provided.

FIG. 15 is a diagram for describing another example of the lens design by the design device according to the present embodiment. In FIG. 15, the horizontal axis is the optimization parameter (α), and the vertical axis is the spherical strength error and astigmatism. The spherical strength error is represented by a solid line and the astigmatism is represented by a dashed line.

According to FIG. 15, it can be seen that the astigmatism increases as the spherical strength error decreases, and the astigmatism decreases as the spherical strength error increases.

It is assumed that a design target that makes the spherical strength error 0 is set to TS, and a design target that makes the astigmatism 0 is set to TA. The change unit 206 sets these design targets to TA≤T0≤TS. The change unit 206 limits the values of dt1 and dt2 so that TR and TL are set to TA≤TR and TL≤TS.

A design target range can be made narrower to improve visual performance. For example, the change unit 206 may set them to TA+α≤TR and TL≤TS-β.

In the embodiment described above, the design device 200 may use only an actual spatial distortion for the optimization design of the lens, in addition to using the difference in prism value (amount) of the lens for a design of the lenses for both eyes. Moreover, the design device 200 may use only the actual spatial distortion for the optimization design of the lens instead of using the difference in prism value (amount) of the lens for the design of the lenses for both eyes.

The design device 200 sets a group of object points P on the space when only the actual spatial distortion is used for the optimization design of the lens. P is a set of points on a sphere or plane at a constant distance from the eye. In the set of points, the design device 200 may change an interval between points, a range of points, and a distance of the set of points depending on a product.

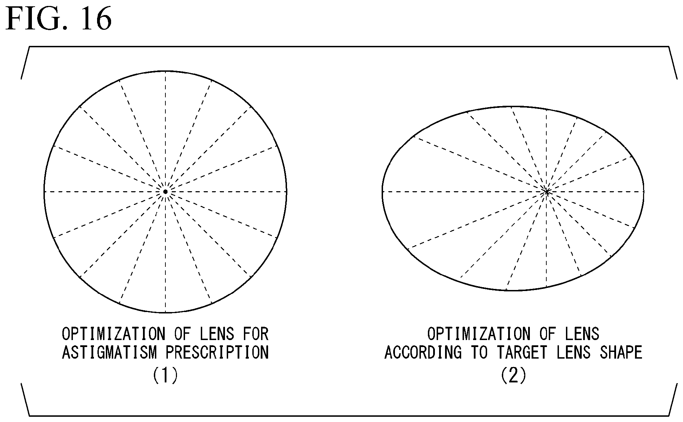

FIG. 16 is a diagram for describing another example of the lens design by the design device according to the present embodiment. In FIG. 16, a left figure (1) is a figure for describing the optimization of a lens for the astigmatism prescription, and a right figure (2) is a figure for describing the optimization of a lens according to a target lens shape. In FIG. 16, an outer frame represents the target lens shape to be optimized, a center of a dotted line represents the optical center, and the dotted lines represent respective axes for the optimization.

When the design device 200 optimizes a lens according to the astigmatism prescription or optimizes a lens according to a target lens shape, it optimizes each of a plurality of axes connecting the optical center and the outer frame so that each has a certain angle. The design device 200 calculates the difference between the prism values (amounts) of both eyes in the same manner as in the spherical strength lens described above for each axis, and changes the design parameter (α) for each axis on the basis of the calculated difference between the prism values (amounts) of both eyes. By configuring in this manner, the difference between the prism values (amounts) of both eyes can be reduced.

The design device 200 calculates a ray of light connecting each point of P through the lens from pupils of both eyes or the rotation point of an eyeball. The design device 200 calculates an intersection of rays of light from an eye at each object point on the basis of a result of the calculation of the ray of light connecting each point of P. The design device 200 creates a distortion evaluation index, on the basis of the calculated intersection of the rays of light from the eye, by using a left and right symmetrical difference of the intersection.

The design device 200 may introduce this distortion evaluation index into a process of optimizing aspheric surfaces of the lenses for both eyes. When the distortion evaluation index is introduced, the design device 200 performs optimization such that the spatial distortion is minimized by the distortion evaluation index while changing the optimization target in the same manner as in the embodiment described above.

By configuring in this manner, a binocular design that minimizes distortion within a distance and a viewing range suitable for an application of eyeglasses can be made.

According to the design device 200 of the embodiment, when the prescriptions of both eyes are different, the difference in prism value (amount) of the lenses for both eyes in the peripheries of the lenses is reduced compared to in the reference design, and the distortion of the spatial vision by both eyes is reduced.

By configuring in this manner, it is possible to reduce a distortion when the surroundings are viewed with binocular vision compared to in the reference design. Furthermore, since the difference in prism value (amount) of both eyes can be reduced, a difference in image magnification in the peripheries of the lenses can be reduced compared to in the reference design.

When binocular vision is performed, it is known that if there is a large difference in image magnification between both eyes, anisotropic vision occurs and an effect of the binocular vision is reduced. The design device 200 can reduce the difference in image magnification between both eyes in peripheral vision compared to in the reference design, so that there is an effect of facilitating fusion of binocular vision.

Although the embodiment of the present invention has been described in detail with reference to the drawings, a specific configuration is not limited to the present embodiment, and includes design and the like within the scope of the appended claims.

### [Reference Signs List]

1 Eyeglass lens processing system
10 Optical shop
100 Store terminal device
200 Design device
202 Communication unit
203 Processing unit
204 Acquisition unit
205 Calculation unit
206 Change unit
207 Creation unit
210 Storage unit
300 Processing device

## Claims

1. An eyeglass lens processing plant (20) comprising a processing device (300) and an eyeglass lens design device (200) for designing a pair of aspherical lenses which have different strengths for the left and right lenses, and have rotational symmetry or axial symmetry around a component of a fixed focal length lens for a distance prescription comprising a fixed focal length lens or a progressive refractive lens, the eyeglass lens design device (200) comprising:
an acquisition unit (204) configured to acquire information specifying a left prism amount corresponding to a left-eye strength and information specifying a right prism amount corresponding to a right-eye strength on the basis of a relationship between a prescription strength and a prism amount of each of a plurality of aspherical lenses;
a calculation unit (205) configured to calculate a difference between a left prism amount and a right prism amount on the basis of the information specifying the left prism amount and the information specifying the right prism amount, which are acquired by the acquisition unit (204);
a change unit (206) configured to derive a design parameter change amount of a right-eye aspherical lens and/or a left-eye aspherical lens on the basis of the difference between the left prism amount and the right prism amount, which is calculated by the calculation unit (205), and to change a design parameter (α) of the right-eye aspherical lens and/or the left-eye aspherical lens on the basis of the derived design parameter change amount, wherein the design parameter (α) is a parameter that changes a ratio between spherical strength error and astigmatism, and a prism amount in a periphery of a lens; and
a creation unit (207) configured to create a processing request addressed to the processing device (300), the processing request including lens design data including the design parameter (α),
wherein the processing device (300) is configured to drive and control a processing machine on the basis of the lens design data such that the processing machine grinds and polishes inner and outer surfaces of a block piece according to the lens design data to manufacture inner and outer surface shapes of an eyeglass lens.

2. The eyeglass lens processing plant (20) according to claim 1,
wherein the change unit (206) derives the design parameter change amount that reduces the difference between the left prism amount and the right prism amount on the basis of the difference between the left prism amount and the right prism amount.

3. The eyeglass lens processing plant (20) according to claim 1 or 2, wherein the change unit (206) changes the derived design parameter on the basis of a limit value of a design parameter.

4. The eyeglass lens processing plant (20) according to any one of claims 1 to 3,
wherein the acquisition unit (204) acquires information specifying a left prism amount at a position 5 mm or more and 50 mm or less from an optical center and information specifying a right prism amount corresponding to a right strength.

5. The eyeglass lens processing plant (20) according to any one of claims 1 to 4,
wherein the acquisition unit (204) acquires information specifying a left prism amount at a position 5 mm or more and 50 mm or less in a horizontal direction from an optical center and information specifying a right prism amount corresponding to a right strength.

6. An eyeglass lens design method executed by a computer that designs a pair of aspherical lenses that have different strengths for the left and right lenses, and have rotational symmetry or axial symmetry around a component of a fixed focal length lens for a distance prescription comprising a fixed focal length lens or a progressive refractive lens, the method comprising:
a step of acquiring information specifying a left prism amount corresponding to a left-eye strength and information specifying a right prism amount corresponding to a right-eye strength on the basis of a relationship between a prescription strength and a prism amount of each of a plurality of aspherical lenses;
a step of calculating a difference between the left prism amount and the right prism amount on the basis of the information specifying the left prism amount and the information specifying the right prism amount acquired in the step of acquisition;
a step of deriving a design parameter change amount of a right-eye aspherical lens and/or a left-eye aspherical lens on the basis of the difference between the left prism amount and the right prism amount calculated in the step of calculation and changing a design parameter (α) of the right-eye aspherical lens and/or the left-eye aspherical lens on the basis of the derived design parameter change amount, wherein the design parameter (α) is a parameter that changes a ratio between spherical strength error and astigmatism, and a prism amount in a periphery of a lens;
a step of outputting a processing request to a processing device (300), the processing request including lens design data including the design parameter (α); and
a step of driving and controlling a processing machine by the processing device (300) on the basis of the lens design data such that the processing machine grinds and polishes inner and outer surfaces of a block piece according to the lens design data to manufacture inner and outer surface shapes of an eyeglass lens.

7. A program that causes a computer to execute:
a step of acquiring information specifying a left prism amount corresponding to a left-eye strength and information specifying a right prism amount corresponding to a right-eye strength on the basis of a relationship between a prescription strength and a prism amount of each of a plurality of aspherical lenses that have rotational symmetry or axial symmetry around a component of a fixed focal length lens for a distance prescription comprising a fixed focal length lens or a progressive refractive lens;
a step of calculating a difference between the left prism amount and the right prism amount on the basis of the information specifying the left prism amount and the information specifying the right prism amount acquired in the step of acquisition; and
a step of deriving a design parameter change amount of a right-eye aspherical lens and/or a left-eye aspherical lens on the basis of the difference between the left prism amount and the right prism amount calculated in the step of calculation and changing a design parameter (α) of the right-eye aspherical lens and/or the left-eye aspherical lens on the basis of the derived design parameter change amount, wherein the design parameter (α) is a parameter that changes a ratio between spherical strength error and astigmatism, and a prism amount in a periphery of a lens;
a step of outputting a processing request to a processing device (300), the processing request including lens design data including the design parameter (α); and
a step of driving and controlling a processing machine by the processing device (300) on the basis of the lens design data such that the processing machine grinds and polishes inner and outer surfaces of a block piece according to the lens design data to manufacture inner and outer surface shapes of an eyeglass lens.

## Patentansprüche

1. Brillenglas-Bearbeitungsanlage (20), die aufweist: eine Bearbeitungsvorrichtung (300) und eine Brillenglas-Entwurfsvorrichtung (200) zum Entwerfen eines Paars von asphärischen Linsen, die unterschiedliche Stärken für die linke und die rechte Linse aufweisen und eine Rotationssymmetrie oder eine Axialsymmetrie um eine Komponente einer Linse mit fester Brennweite für eine Entfernungsverschreibung aufweisen, die eine Linse mit fester Brennweite oder eine Gleitsichtlinse aufweist, wobei die Brillenglas-Entwurfsvorrichtung (200) aufweist:
eine Erfassungseinheit (204), die konfiguriert ist, Informationen, die einen linken Prismenbetrag spezifizieren, der mit einer Stärke für das linke Auge korrespondiert, und Informationen, die einen rechten Prismenbetrag spezifizieren, der mit einer Stärke für das rechte Auge korrespondiert, auf der Basis einer Beziehung zwischen einer Verschreibungsstärke und einem Prismenbetrag jeder von mehreren asphärischen Linsen zu erfassen;
eine Berechnungseinheit (205), die konfiguriert ist, eine Differenz zwischen einem linken Prismenbetrag und einem rechten Prismenbetrag auf der Basis der Informationen, die den linken Prismenbetrag spezifizieren, und der Informationen, die den rechten Prismenbetrag spezifizieren, die durch die Erfassungseinheit (204) erfasst werden, zu berechnen;
eine Änderungseinheit (206), die konfiguriert ist, einen Entwurfsparameter-Änderungsbetrag einer asphärischen Linse für das rechte Auge und/oder einer asphärischen Linse für das linke Auge auf der Basis der Differenz zwischen dem linken Prismenbetrag und dem rechten Prismenbetrag, die durch die Berechnungseinheit (205) berechnet wird, abzuleiten und einen Entwurfsparameter (α) der asphärischen Linse für das rechte Auge und/oder der asphärischen Linse für das linke Auge auf der Basis des abgeleiteten Entwurfsparameter-Änderungsbetrags zu ändern, wobei der Entwurfsparameter (α) ein Parameter, der ein Verhältnis zwischen sphärischem Stärkefehler und Astigmatismus ändert, und ein Prismenbetrag in einer Peripherie einer Linse ist; und
eine Erzeugungseinheit (207), die konfiguriert ist, eine Bearbeitungsanfrage zu erzeugen, die an die Bearbeitungsvorrichtung (300) gerichtet ist, wobei die Bearbeitungsanfrage Linsenentwurfsdaten enthält, die den Entwurfsparameter (α) enthalten,
wobei die Bearbeitungsvorrichtung (300) konfiguriert ist, eine Bearbeitungsmaschine auf der Basis der Linsenentwurfsdaten anzutreiben und zu steuern, sodass die Bearbeitungsmaschine eine innere und eine äußere Oberfläche eines Blockstücks gemäß den Linsenentwurfsdaten schleift und poliert, um eine innere und eine äußere Oberflächenform eines Brillenglases herzustellen.

2. Brillenglas-Bearbeitungsanlage (20) nach Anspruch 1,
wobei
die Änderungseinheit (206) den Entwurfsparameter-Änderungsbetrag ableitet, der die Differenz zwischen dem linken Prismenbetrag und dem rechten Prismenbetrag auf der Basis der Differenz zwischen dem linken Prismenbetrag und dem rechten Prismenbetrag reduziert.

3. Brillenglas-Bearbeitungsanlage (20) nach Anspruch 1 oder 2,
wobei die Änderungseinheit (206) den abgeleiteten Entwurfsparameter auf der Basis eines Grenzwerts eines Entwurfsparameters ändert.

4. Brillenglas-Bearbeitungsanlage (20) nach einem der Ansprüche 1 bis 3,
wobei die Erfassungseinheit (204) Informationen, die einen linken Prismenbetrag an einer Position von 5 mm oder mehr und 50 mm oder weniger von einem optischen Zentrum spezifizieren, und Informationen, die einen rechten Prismenbetrag spezifizieren, der mit einer rechten Stärke korrespondiert, erfasst.

5. Brillenglas-Bearbeitungsanlage (20) nach einem der Ansprüche 1 bis 4,
wobei die Erfassungseinheit (204) Informationen, die einen linken Prismenbetrag an einer Position von 5 mm oder mehr und 50 mm oder weniger in einer horizontalen Richtung von einem optischen Zentrum spezifizieren, und Informationen, die einen rechten Prismenbetrag spezifizieren, der mit einer rechten Stärke korrespondiert, erfasst.

6. Brillenglas-Entwurfsverfahren, das durch einen Computer ausgeführt wird, der ein Paar von asphärischen Linsen entwirft, die unterschiedliche Stärken für die linke und die rechte Linse aufweisen und eine Rotationssymmetrie oder eine Axialsymmetrie um eine Komponente einer Linse mit fester Brennweite für eine Entfernungsverschreibung aufweisen, die eine Linse mit fester Brennweite oder eine Gleitsichtlinse aufweist, wobei das Verfahren aufweist:
einen Schritt eines Erfassens von Informationen, die einen linken Prismenbetrag spezifizieren, der mit einer Stärke für das linke Auge korrespondiert, und von Informationen, die einen rechten Prismenbetrag spezifizieren, der mit einer Stärke für das rechte Auge korrespondiert, auf der Basis einer Beziehung zwischen einer Verschreibungsstärke und einem Prismenbetrag jeder von mehreren asphärischen Linsen;
einen Schritt eines Berechnens einer Differenz zwischen dem linken Prismenbetrag und dem rechten Prismenbetrag auf der Basis der Informationen, die den linken Prismenbetrag spezifizieren, und der Informationen, die den rechten Prismenbetrag spezifizieren, die in dem Schritt eines Erfassens erfasst werden;
einen Schritt eines Ableitens eines Entwurfsparameter-Änderungsbetrags einer asphärischen Linse für das rechte Auge und/oder einer asphärischen Linse für das linke Auge auf der Basis der Differenz zwischen dem linken Prismenbetrag und dem rechten Prismenbetrag, die in dem Schritt eines Berechnens berechnet wird, und eines Änderns eines Entwurfsparameters (α) der asphärischen Linse für das rechte Auge und/oder der asphärischen Linse für das linke Auge auf der Basis des abgeleiteten Entwurfsparameter-Änderungsbetrags, wobei der Entwurfsparameter (α) ein Parameter, der ein Verhältnis zwischen sphärischem Stärkefehler und Astigmatismus ändert, und ein Prismenbetrag in einer Peripherie einer Linse ist;
einen Schritt eines Ausgebens einer Bearbeitungsanfrage an eine Bearbeitungsvorrichtung (300), wobei die Bearbeitungsanfrage Linsenentwurfsdaten enthält, die den Entwurfsparameter (α) enthalten; und
einen Schritt eines Antreibens und Steuerns einer Bearbeitungsmaschine durch die Bearbeitungsvorrichtung (300) auf der Basis der Linsenentwurfsdaten, sodass die Bearbeitungsmaschine eine innere und eine äußere Oberfläche eines Blockstücks gemäß den Linsenentwurfsdaten schleift und poliert, um eine innere und eine äußere Oberflächenform eines Brillenglases herzustellen.

7. Programm, das einen Computer veranlasst, auszuführen:
einen Schritt eines Erfassens von Informationen, die einen linken Prismenbetrag spezifizieren, der mit einer Stärke für das linke Auge korrespondiert, und von Informationen, die einen rechten Prismenbetrag spezifizieren, der mit einer Stärke für das rechte Auge korrespondiert, auf der Basis einer Beziehung zwischen einer Verschreibungsstärke und einem Prismenbetrag von jeder von mehreren asphärischen Linsen, die eine Rotationssymmetrie oder eine Axialsymmetrie um eine Komponente einer Linse mit fester Brennweite für eine Entfernungsverschreibung aufweisen, die eine Linse mit fester Brennweite oder eine Gleitsichtlinse aufweist;
einen Schritt eines Berechnens einer Differenz zwischen dem linken Prismenbetrag und dem rechten Prismenbetrag auf der Basis der Informationen, die den linken Prismenbetrag spezifizieren, und der Informationen, die den rechten Prismenbetrag spezifizieren, die in dem Schritt eines Erfassens erfasst werden; und
einen Schritt eines Ableitens eines Entwurfsparameter-Änderungsbetrags einer asphärischen Linse für das rechte Auge und/oder einer asphärischen Linse für das linke Auge auf der Basis der Differenz zwischen dem linken Prismenbetrag und dem rechten Prismenbetrag, die in dem Schritt eines Berechnens berechnet wird, und eines Änderns eines Entwurfsparameters (α) der asphärischen Linse für das rechte Auge und/oder der asphärischen Linse für das linke Auge auf der Basis des abgeleiteten Entwurfsparameter-Änderungsbetrags, wobei der Entwurfsparameter (α) ein Parameter, der ein Verhältnis zwischen sphärischem Stärkefehler und Astigmatismus ändert, und ein Prismenbetrag in einer Peripherie einer Linse ist;
einen Schritt eines Ausgebens einer Bearbeitungsanfrage an eine Bearbeitungsvorrichtung (300), wobei die Bearbeitungsanfrage Linsenentwurfsdaten enthält, die den Entwurfsparameter (α) enthalten; und
einen Schritt eines Antreibens und Steuerns einer Bearbeitungsmaschine durch die Bearbeitungsvorrichtung (300) auf der Basis der Linsenentwurfsdaten, sodass die Bearbeitungsmaschine eine innere und eine äußere Oberfläche eines Blockstücks gemäß den Linsenentwurfsdaten schleift und poliert, um eine innere und eine äußere Oberflächenform eines Brillenglases herzustellen.

## Revendications

1. Une installation de traitement de lentilles ophtalmiques (20) comprenant un dispositif de traitement (300) et un dispositif de conception de lentilles ophtalmiques (200) destiné à concevoir une paire de lentilles asphériques qui présentent des puissances différentes pour les lentilles gauche et droite, et présentent une symétrie de rotation ou une symétrie axiale autour d'une composante d'une lentille à foyer fixe pour une prescription de vision de loin comprenant une lentille à foyer fixe ou une lentille réfractive progressive, le dispositif de conception de lentilles ophtalmiques (200) comprenant :
une unité d'acquisition (204) configurée pour acquérir des informations spécifiant une quantité de prisme gauche correspondant à une puissance de l'œil gauche et des informations spécifiant une quantité de prisme droite correspondant à une puissance de l'œil droit sur la base d'une relation entre une puissance de prescription et une quantité de prisme de chacune d'une pluralité de lentilles asphériques ;
une unité de calcul (205) configurée pour calculer une différence entre une quantité de prisme gauche et une quantité de prisme droite sur la base des informations spécifiant la quantité de prisme gauche et des informations spécifiant la quantité de prisme droite, qui sont acquises par l'unité d'acquisition (204) ;
une unité de modification (206) configurée pour dériver une quantité de modification du paramètre de conception d'une lentille asphérique de l'œil droit et/ou d'une lentille asphérique de l'œil gauche sur la base de la différence entre la quantité de prisme gauche et la quantité de prisme droite, qui est calculée par l'unité de calcul (205), et pour modifier un paramètre de conception (α) de la lentille asphérique de l'œil droit et/ou de la lentille asphérique de l'œil gauche sur la base de la quantité de modification du paramètre de conception dérivée, dans laquelle le paramètre de conception (α) est un paramètre qui modifie un rapport entre une erreur de puissance sphérique et un astigmatisme, et une quantité de prisme à la périphérie d'une lentille ; et
une unité de création (207) configurée pour créer une demande de traitement adressée au dispositif de traitement (300), la demande de traitement comprenant des données de conception de lentille comprenant le paramètre de conception (α),
dans laquelle le dispositif de traitement (300) est configuré pour entraîner et commander une machine de traitement sur la base des données de conception de lentille de sorte que la machine de traitement meule et polit les surfaces intérieure et extérieure d'une pièce-bloc conformément à la conception de lentille pour fabriquer des formes de surfaces intérieure et extérieure d'un verre de lunettes.

2. L'installation de traitement de verres de lunettes (20) selon la revendication 1, dans laquelle
l'unité de changement (206) déduit la quantité de changement du paramètre de conception qui réduit la différence entre la quantité de prisme gauche et la quantité de prisme droite sur la base de la différence entre la quantité de prisme gauche et la quantité de prisme droite.

3. L'installation de traitement de verres de lunettes (20) selon la revendication 1 ou 2,
dans laquelle l'unité de changement (206) change le paramètre de conception déduit sur la base d'une valeur limite d'un paramètre de conception.

4. L'installation de traitement de verres de lunettes (20) selon l'une quelconque des revendications 1 à 3,
dans laquelle l'unité d'acquisition (204) acquiert des informations spécifiant une quantité de prisme gauche à une position située à 5 mm ou plus et à 50 mm ou moins du centre optique et des informations spécifiant une quantité de prisme droite correspondant à une puissance droite.

5. L'installation de traitement de verres de lunettes (20) selon l'une quelconque des revendications 1 à 4,
dans laquelle l'unité d'acquisition (204) acquiert des informations spécifiant une quantité de prisme gauche à une position située à 5 mm ou plus et à 50 mm ou moins dans une direction horizontale à partir d'un centre optique et des informations spécifiant une quantité de prisme droite correspondant à une puissance droite.

6. Procédé de conception de verres de lunettes exécuté par un ordinateur qui conçoit une paire de lentilles asphériques qui présentent des puissances différentes pour les lentilles gauche et droite, et présentent une symétrie de rotation ou une symétrie axiale autour d'un composant d'une lentille à focale fixe pour une prescription de vision de loin comprenant une lentille à focale fixe ou une lentille réfractive progressive la méthode comprenant :
une étape d'acquisition d'informations spécifiant une quantité de prisme gauche correspondant à une puissance de l'œil gauche et d'informations spécifiant une quantité de prisme droite correspondant à une puissance de l'œil droit sur la base d'une relation entre une puissance de prescription et une quantité de prisme de chacune d'une pluralité de lentilles asphériques ;
une étape de calcul d'une différence entre la quantité de prisme gauche et la quantité de prisme droite sur la base des informations spécifiant la quantité de prisme gauche et des informations spécifiant la quantité de prisme droite acquises lors de l'étape d'acquisition ;
une étape de dérivation d'une quantité de changement de paramètre de conception d'une lentille asphérique pour l'œil droit et/ou d'une lentille asphérique pour l'œil gauche sur la base de la différence entre la quantité de prisme gauche et la quantité de prisme droite calculée lors de l'étape de calcul et de changement d'un paramètre de conception (α) de la lentille asphérique pour l'œil droit et/ou de la lentille asphérique pour l'œil gauche sur la base de la quantité de changement de paramètre de conception déterminée, dans laquelle le paramètre de conception (α) est un paramètre qui modifie un rapport entre une erreur de puissance sphérique et un astigmatisme, et une quantité de prisme dans une périphérie d'une lentille ;
une étape de sortie d'une demande de traitement vers un dispositif de traitement (300), la demande de traitement comprenant des données de conception de lentille comprenant le paramètre de conception (α) ; et
une étape d'entraînement et de commande d'une machine de traitement par le dispositif de traitement (300) sur la base des données de conception de lentille de sorte que la machine de traitement meule et polit des surfaces intérieure et extérieure d'une pièce-bloc conformément aux données de conception de lentille afin de fabriquer des formes de surface intérieure et extérieure d'une lentille de lunettes.

7. Un programme qui amène un ordinateur à exécuter :
une étape d'acquisition d'informations spécifiant une quantité de prisme gauche correspondant à une puissance de l'œil gauche et d'informations spécifiant une quantité de prisme droite correspondant à une puissance de l'œil droit sur la base d'une relation entre une puissance de prescription et une quantité de prisme de chacune d'une pluralité de lentilles asphériques qui présentent une symétrie de rotation ou une symétrie axiale autour d'un composant d'une lentille à focale fixe pour une prescription de vision de loin comprenant une lentille à focale fixe ou une lentille réfractive progressive ;
une étape de calcul d'une différence entre la quantité de prisme gauche et la quantité de prisme droite sur la base des informations spécifiant la quantité de prisme gauche et les informations spécifiant la quantité de prisme droite acquises lors de l'étape d'acquisition ; et
une étape de dérivation d'une quantité de variation de paramètre de conception d'une lentille asphérique pour l'œil droit et/ou d'une lentille asphérique pour l'œil gauche sur la base de la différence entre la quantité de prisme gauche et la quantité de prisme droite calculée lors de l'étape de calcul et de modification d'un paramètre de conception (α) de la lentille asphérique pour l'œil droit et/ou de la lentille asphérique pour l'œil gauche sur la base de la quantité de variation de paramètre de conception dérivée, le paramètre de conception (α) étant un paramètre qui modifie un rapport entre l'erreur de puissance sphérique et l'astigmatisme, et une quantité de prisme à la périphérie d'une lentille ;
une étape de sortie d'une demande de traitement vers un dispositif de traitement (300), la demande de traitement comprenant des données de conception de lentille comprenant le paramètre de conception (α) ; et
une étape d'entraînement et de commande d'une machine de traitement par le dispositif de traitement (300) sur la base des données de conception de lentille de sorte que la machine de traitement meule et polit des surfaces intérieure et extérieure d'une pièce-bloc conformément aux données de conception de lentille pour fabriquer des formes de surface intérieure et extérieure d'une lentille de lunettes.
